# EUROPEAN PATENT SPECIFICATION

(11) **EP 2 398 152 B1**
(45) Date of publication and mention of the grant of the patent: **27.11.2013**
(21) Application number: 10290331.7
(22) Date of filing: 18.06.2010
(51) Int. Cl.: H04B 1/10, H04B 1/30

(54) **Direct down conversion receiver and method of operation**
Direktabwärtungsmischungsempfänger und Betriebsverfahren
Récepteur à transposition directe par abaissement de fréquence et procédé de fonctionnement

(43) Date of publication of application: 21.12.2011
(73) Proprietor: Alcatel Lucent, 75007 Paris (FR)
(72) Inventor: Martens, Hennig, 71254 Ditzingen (DE)
(74) Representative: Wetzel, Emmanuelle

(56) References cited:
- EP-A1- 1 858 169
- US-A1- 2006 141 974

## Description

### Field of the Invention

The invention relates to radio communications receivers, in particular to direct down conversion receivers with IQ demodulators.

### Background of the invention

In cellular communications systems direct down conversion receives are incorporated into base stations. Typically different mobile communications operators or carriers have independent cellular communications systems which provide coverage for identical or overlapping geographic regions. Different frequency bands will be assigned to the different operators.

The different frequency bands used by the different operators may cause interference with each other when multicarrier receivers which use direct down conversion technology are used. Images of blocking signals created in the direct down conversion receiver can cause IQ errors in the receive path. This IQ error is the effect of the gain and phase unbalance in the demodulator and the baseband amplifier. The IQ error least to an unwanted image in the receiver. When the image and the wanted signal fall after down conversion in the same channel, the sensitivity may be degraded in the channel. Current solutions to this problem are a digital IQ error compensation.

United States patent application publication US 2006/0141974 A1 discloses a low IF mixer and method for down-converting a signal a desired frequency. The energy of sidebands on each side of the desired frequency is evaluated, and a local oscillator frequency is selected based on the evaluation of the energy.

European patent application publication EP 1 858 169 A1 discloses a mobile wireless communication device. The device includes RF circuitry that includes a low-IF receiver circuit operative for maintaining an interferer signal at a same frequency as a wanted signal relative to a local oscillator frequency setting.

### Summary of the invention

The invention provides for a direct down conversion receiver and a method of operating a direct down conversion receiver in the independent claims. Embodiments are given in the dependent claims.

A difficult of using the aforementioned digital IQ error compensation is that depends upon the compensation algorithm. The use of a digital IQ error compensation may require a complicated error compensation algorithm. This error compensation algorithm needs much processing power and hardware. Additionally the creation of such algorithms required extensive development and testing. Therefore the use of a digital IQ error compensation algorithm can be an expensive solution for the problem of the digital IQ error. Such an IQ error compensation algorithm for use in GSM multicarrier base stations does not exist.

An improved amplifier and/or digital signal processing system which eliminates digital IQ error compensation is therefore needed. The unwanted image of the blocking signal is mainly caused by the mixers of the direct down conversion receiver. Essentially the incoming signal is multiplied by the oscillator frequency. If the blocking signal is a given frequency above or below the base band center frequency, then the unwanted image will be below or above the base band center frequency by the same amount. Embodiments of the invention shift the image frequency by adjusting the local oscillator frequency. This shifts the unwanted image frequency in the base band frequency. In some embodiments the base band frequency is changed to avoid the image frequency. In other embodiments, base band frequency hopping is performed where the base band frequency is changed periodically for discrete time slots. If the duration of the time slots is chosen to be sufficiently short interference to the radio communication caused by the image is minimal. In still other embodiments, the base band frequency is frequency hopped and base band frequencies which experience interference are avoided.

A processor as used herein is an electronic component which is able to execute a program or machine executable instruction. References to the computing device comprising "a processor" should be interpreted as possibly containing more than one processor. The term computing device should also be interpreted to possibly refer to a collection or network of computing devices each comprising a processor. Many programs have their instructions performed by multiple processors that may be within the same computing device or which may even distributed across multiple computing device.

A computer-readable storage medium as used herein is any storage medium which may store instructions which are executable by a processor of a computing device. The computer-readable storage medium may be a computer-readable non-transitory storage medium. The instructions stored on the computer-readable storage medium may be referred to as a computer program product. The computer-readable storage medium may also be a tangible computer readable medium. In some embodiments, a computer-readable storage medium may also be able to store data which is able to be accessed by the processor of the computing device. An example of a computer-readable storage medium include, but are not limited to: a floppy disk, a magnetic hard disk drive, a solid state hard disk, flash memory, a USB thumb drive, Random Access Memory (RAM) memory, Read Only Memory (ROM) memory, an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network.

In one aspect the invention provides for a direct down conversion receiver for receiving a radio transmission in a radio transmission channel. The direct down conversion receiver comprises an IQ demodulator means. The IQ demodulator means may be an IQ demodulator. The IQ demodulator has a baseband frequency. The IQ demodulator means comprises a local oscillator means having a variable frequency which determines the baseband frequency. The local oscillator means may be an oscillator. The direct down conversion receiver further comprises a control means for adjusting the variable frequency for reduction of the interference caused by a blocking signal. The control means may be a controller. The direct down conversion receiver and the IQ demodulator means may be implemented in a combination of software and/or hardware components. For instance the local oscillator means may be implemented by an oscillator circuit or it may be implemented as a routine in a digital signal processing application.

The local oscillator means controls the baseband frequency. This means that any aliases of a blocking signal have their frequency determined in part by the frequency of the local oscillator means. If a blocking signal causes aliasing or interference in the radio transmission channel then changing the frequency of the local oscillator means will change the frequency of the interference. This embodiment is advantageous because interference to the radio transmission caused by a blocking signal can be reduced or eliminated purely by a change in the receiver. There does not need to be change or alteration in the blocking signal and also the frequency with which the radio transmission is made does not need to be changed. In other words the radio transmission channel can be left as it is.

In another embodiment adjusting the variable frequency changes an image frequency of an image of a blocking signal. The demodulation process in the IQ demodulator causes images of signals which are symmetric around the baseband frequency. Adjusting the frequency of the baseband by adjusting the variable frequency of the local oscillator means changes the image frequency.

In another embodiment the direct down conversion receiver further comprises an interference detection means for detecting the reception of interference to the radio transmission caused by the blocking signal. This embodiment is advantageous because if the interference to the radio transmission is detected then it can be compensated for by altering the variable frequency. The interference detection means could take several different forms in different embodiments. For instance the interference detection means could be a receiver which detects the blocking signal directly. After the blocking signal frequency is detected. The image frequency of the blocking signal be calculated using the blocking frequency and the local oscillator frequency.

In another embodiment the control means or another computer or controller could analyze a signal from the output of the direct down conversion receiver and determine that the data is being corrupted by the reception of interference.

In another embodiment the direct down conversion receiver is adapted for receiving radio transmission on multiple radio transmission channels. The multiple radio transmission channels comprise the radio transmission channel. The control means is adapted for adjusting the variable frequency such that the image frequency is outside of the radio bandwidth of the radio transmission channels. This embodiment is advantageous because if the image frequency is outside of the radio bandwidth of the radio transmission channels then the image of the blocking signal will not interfere with radio transmission. This embodiment is particularly advantageous because if a receiver is adapted for receiving transmissions on multiple radio transmission channels then the filters at the input of the receiver need to be broader band than if only a single channel is received. This means that the receiver is more susceptible to an image of a blocking signal being formed. This embodiment provides a means of reducing the interference caused by blocking signals without using a narrow filtering or filtering scheme.

In another embodiment the direct down conversion receiver is adapted for baseband frequency hopping the local oscillator during the reception of the radio transmission. In baseband frequency hopping the baseband frequency is periodically or repeatedly adjusted. This embodiment is advantageous because if there is interference with the radio transmission then it will only be for the duration of the timeslot in which the local oscillator causes the baseband frequency to cause an image of the blocking frequency that interferes with the radio transmission.

In another embodiment the direct down conversion receiver is adapted for baseband frequency hopping using a predetermined set of hopping frequencies. This embodiment is advantageous because the set of hopping frequencies can be chosen such that images which interfere with the reception of the radio transmission can be avoided.

In another embodiment the radio transmission is a digital radio transmission comprising data. The radio transmission is divided into timeslots. The variable frequency is adjusted between each of the timeslots. This is a particularly advantageous embodiment. In one aspect the digital radio transmission can be encoded using an error correcting code. The timeslots can be small enough such that the data in each of the timeslots can be recovered or partially recovered by the error correcting code of the digital radio transmission. This may be considered to be a combination of an embodiment of the invention with an IQ error correction. This means that if there is interference in several of the timeslots it will not interfere significantly with the radio transmission.

In another embodiment the control system is adapted for recording the detection of interference caused by the blocking signal. The baseband frequency hopping is performed using a hopping pattern which selects frequencies from a set of hopping frequencies. This is particularly advantageous because the hopping pattern can be constructed such that known or commonly occurring blocking signals can be avoided by removing specific frequencies and not using them in the hopping pattern. For the case that the transmission is a digital radio transmission this embodiment is also particularly advantageous. There is the combination of known or common blocking signals having their interference eliminated plus any error correction which is incorporated into the digital signal can be used to further reduce errors in transmission during random or not commonly occurring interference.

In another embodiment the hopping pattern is determined at least partially using the recorded detection of interference caused by the blocking signal. This embodiment is advantageous because the direct down conversion receiver can be trained to avoid commonly occurring interference caused by a blocking signal. This could be implemented in several ways. A table or database could be made of when interference to the radio transmission occurs and what the variable frequency is when the interference occurs. This could be analyzed using a statistical technique where various possible variable frequencies are ranked and the ones which are least likely to cause interference are selected. Alternatively blocking signals may be for instance related to periodic occurrences at various times of the day or during the week. More sophisticated statistical analyses could be used to select a hopping pattern which is the most efficient for a particular time of day and/or week. A trained software module such as a neural net could also be trained to select a hopping pattern.

In another embodiment the direct down conversion receiver further comprises an interference prediction means for detecting the blocking signal and calculating the variable frequency at which the blocking signal interferes with the radio transmission. This could either be a separate receiver which communicates with a computer or the control means to perform the calculation, the direct down conversion receiver could also be modified such that it can detect the blocking signals. This embodiment is advantageous because blocking signals can be detected before they cause interference with the radio transmission.

In another embodiment the baseband frequency hopping is performed using a hopping pattern which selects frequencies from a set of hopping frequencies. The variable frequency at which the blocking signal interferes with the radio transmission is excluded from the hopping pattern. This embodiment is advantageous because variable frequencies which are likely to cause images which interfere with the radio transmission are proactively excluded from the hopping pattern. The blocking signal is detected and it is then calculated which of the set of variable frequencies is likely to cause interference. Then these particular variable frequencies are removed and not included into the hopping pattern and thus a hopping pattern is created which infrequently experiences interference.

In another embodiment the direct down conversion receiver is a multicarrier receiver. This embodiment is particularly advantageous because a multicarrier receiver is adapted for receiving radio transmissions of multiple radio transmission channels. The filters at the input of the direct conversion receiver therefore are more broadband than if a single radio transmission channel is used. The advantages of this have been previously discussed.

In another embodiment if an unwanted blocking signal appears, the receiver can measures the frequency, calculate the expected image frequency in the baseband and store these frequencies. The receiver has a record of the signals frequencies that it uses for reception. The control means uses this record to calculate a table of possible frequencies for the local oscillator means to use. The calculation uses the possible blocking frequencies, the possible local oscillator frequencies and the own used signal frequencies. The receiver uses only a set of dedicated local oscillator frequencies from the table.

In another embodiment if the receiver has only GSM users, a fast baseband frequency hopping is possible. This means, the local oscillator changes its frequency from timeslot to timeslot. In this case an upcoming blocking signal disturbs the user in only one timeslot. The receiver may use also a table with local oscillator frequencies which are calculated as described the previous embodiment.

In another aspect the direct down conversion receiver may be incorporated into a mobile communications network. For instance a direct down conversion receiver may be the receiver of a base station or Node B.

In another aspect the invention provides for a method of operating a direct down conversion receiver for receiving a radio transmission in a radio transmission channel. The direct down conversion receiver comprises an IQ demodulator means. The IQ demodulator has a baseband frequency. The IQ demodulator means comprises a local oscillator means having a variable frequency which determines the baseband frequency. The IQ demodulator means further comprises a control means for adjusting the variable frequency for reduction of the interference caused by a blocking signal. The direct down conversion receiver further comprises an interference detection means for detecting the reception of interference to the radio transmission caused by the blocking signal. The method comprises the step of detecting the reception of interference to the radio transmission caused by the blocking signal. The method further comprises the step of adjusting the variable frequency such that the image frequency is outside of the radio bandwidth of the radio transmission channel. The advantages of this have been previous discussed. This aforementioned method may be used for implementing a program, a computer program product, or a computer readable storage medium.

### Brief description of the drawings

In the following preferred embodiments of the invention will be discussed in greater detail by way of example only making reference to the drawings in which:
Fig. 1 schematic diagram illustrating a direct down conversion receiver according to an embodiment of the invention;
Fig. 2 shows a plot of the radio frequency vs. power to illustrate two user signals and one blocking signal;
Fig. 3 shows a further plot of the radio frequency vs. power to illustrate two user signals and one blocking signal where the local oscillator frequency has been changed;
Fig. 4 shows a plot of the base band frequency vs. power to illustrate interference caused by an image of the blocking signal;
Fig. 5 shows a plot of the base band frequency vs. power to illustrate how changing the baseband frequency can eliminate the interference shown in Fig. 4;
Fig. 6 shows a block diagram which illustrates an embodiment of a method according to the invention; and
Fig. 7 shows a block diagram which illustrates a further embodiment of a method according to the invention.

### Detailed Description

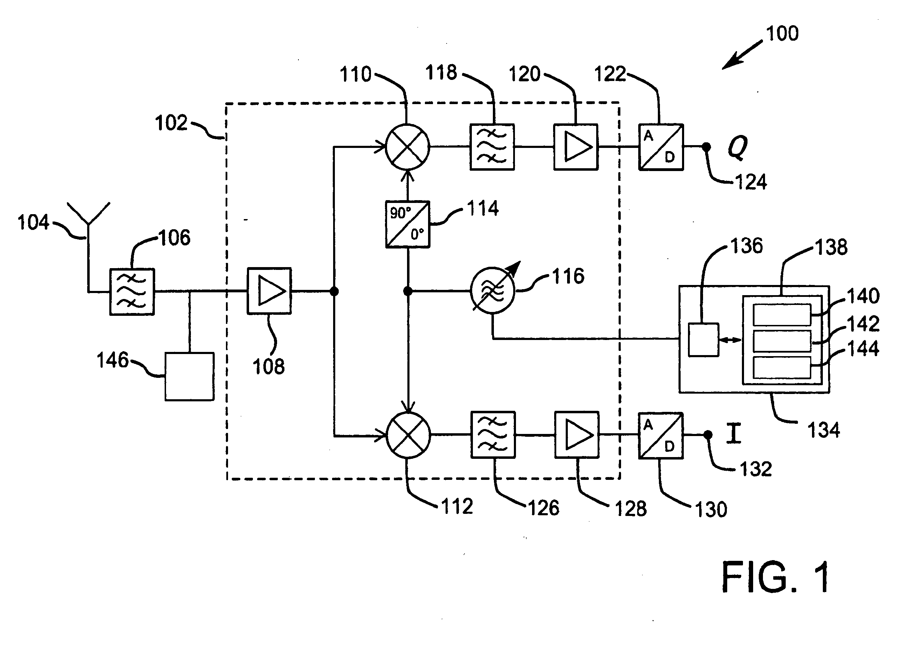

Fig. 1 shows a direct down conversion receiver 100 according to an embodiment of the invention. The receiver 100 comprises an IQ demodulator 102. The direct down conversion receiver 100 also comprises an antenna 104. Antenna 104 is connected to a bandpass filter 106. The bandpass filter 106 is then connected to the IQ demodulator 102. The bandpass filter 106 is connected to an amplifier 108. The signal from the amplifier 108 is split and then fed into a first mixer 110 and a second mixer 112. Both mixers 110, 112 are mixed with a signal from an oscillator 116. The oscillator 116 corresponds to a local oscillator means. The oscillator 116 is connected to a phase-shifter 114. The zero phase-shift is connected to the second mixer 112. The signal from the signal generator 116 with a phase-shift of 90 degrees is connected to the first mixer 110. In the first mixer 110 the signal from the amplifier 108 and the 90 degrees phase-shifted signal from the oscillator 116 are mixed. The output goes to a bandpass filter 118. The bandpass filter 118 then goes to an amplifier 120 which is connected to an analogue-to-digital converter 122. The output of the analogue-to-digital converter 122 is the Q output 124 of the IQ demodulator 102.

The second mixer 112 mixes the signal from the amplifier 108 and the unshifted signal from the oscillator 116. The output of the second mixer 112 is into a bandpass filter 126. The bandpass filter 126 is then connected to an amplifier 128. The amplifier 128 then outputs to an analogue-to-digital converter 130. The output of the digital converter 132 is the I output of the IQ demodulator. The oscillator 116 is controlled by a controller 134. The controller 134 could be a computer or a microcontroller. The controller 134 is adapted for controlling the frequency that is output by the oscillator 116. The controller 134 comprises a processor 136 connected to a memory 138. Within the memory there may be a program 140 for controlling the operation of the oscillator 116. In some embodiments the memory 138 may contain a hopping pattern 142. The hopping pattern 142 is a set of instructions the processor 136 uses to control the baseband frequency hopping of the oscillator 116. The memory 138 may also contain a record of transmission interferences 144. The program 140 may have a module which can read the record of transmission interferences 144 and write a hopping pattern 142 to reduce the amount of interference received on the QI 124, 132 outputs.

In some embodiments the receiver 100 may also comprise a blocking signal detection means 146. In this example the blocking signal detection means 146 is a separate receiver attached to the output of the filter 106. The blocking signal detection means 146 may have a connection to the controller 134 for reporting the detection of blocking signals. Alternatively, a blocking signal detection means may be implemented with digital signal processing which may be connected to the I (132) and Q (124) outputs.

The embodiment shown in Fig. 100 is shown as being implemented as hardware. However, there are also equivalent embodiments where the digital signal processing is performed via software or dedicated DSP components.

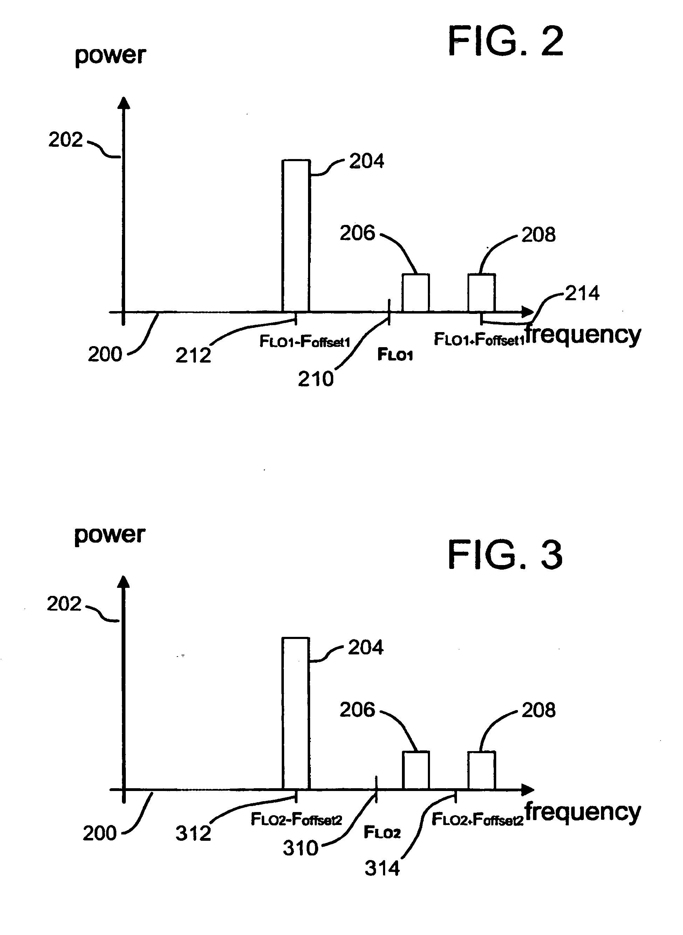

Figs. 2 and 3 are used to illustrate how a blocking signal 204 can cause an image signal with a frequency component that may interfere with a radio transmission such as a first user signal 206 or a second user signal 208. In Fig. 2 is shown a graph of the RF frequency 200 versus power 202. The bar 204 indicates a blocking signal 204 which has a bandwidth indicated by the rectangle. Also shown is a first user signal 206 and a second user signal 208. The first and second user signals 206, 208 could for example be transmissions received from cellular telephones. The blocking signal 208 could be transmissions from other cell phones or a station. The local oscillator frequency 210 is indicated by the mark labeled F_{L01}. With respect to the local oscillator frequency 210 the frequency of the blocking signal 204 has a frequency 212. This is the F_{L01} - F_{offset1}. In the IQ demodulator the signals received are multiplied by the frequency of the local oscillator. As a result of this an image frequency will be created at F_{L01} + F_{offset1}. This is indicated by the mark 214. In the example shown in Fig. 2 the frequency 214 is centered in the radio transmission channel for the second user signal 208. This indicates that the blocking signal 204 will likely interfere with reception of the second user signal 208. Fig. 2 also illustrates an example of how the detection or measurement of a blocking signal 204 can be used to predict if an image of the blocking signal will interfere with the reception of radio transmissions.

Fig. 3 shows roughly the same information as in Fig. 2 except the frequency of the local oscillator has been shifted to a slightly lower frequency. The frequency of the local oscillator, F_{LO2}, is labeled 310. The frequency of the blocking signal 204 is labeled 312. The frequency of the blocking signal 204 is F_{L02} - F_{offset2}. The frequency of an image of the blocking signal is labeled 314. This image has a frequency of F_{L02} + F_{offset2}. It can be seen that frequency 314 has shifted lower and is no longer within the radio transmission channel of the second user signal 208.

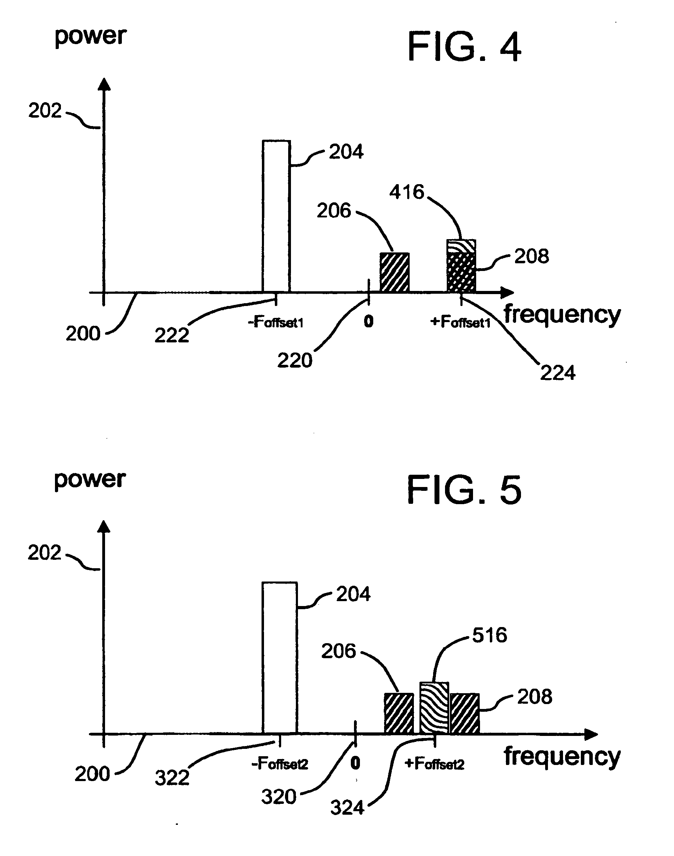

Figs. 4 and 5 show concrete examples of the blocking signal 204. Fig. 4 corresponds to Fig. 2 and Fig. 5 corresponds to Fig. 3. In Fig. 4 the blocking signal 204 has caused an image 416 at the frequency 224. In this Fig. it can be seen that the bridge 416 overlaps with the second user signal 208. Image 416 is shown with wavy lines and the second user signal 208 is shown with straight lines.

As within Fig. 3, Fig. 5 shows the effect of adjusting the baseband frequency 320. In Fig. 5 it is seen that the image of the blocking signal 204 has shifted to the lower frequency of 324. The image signal 516 is now between the first user signal 206 and the second user signal 208. Fig. 5 illustrates how adjusting the variable frequency can reduce or eliminate interference caused by a blocking signal 204.

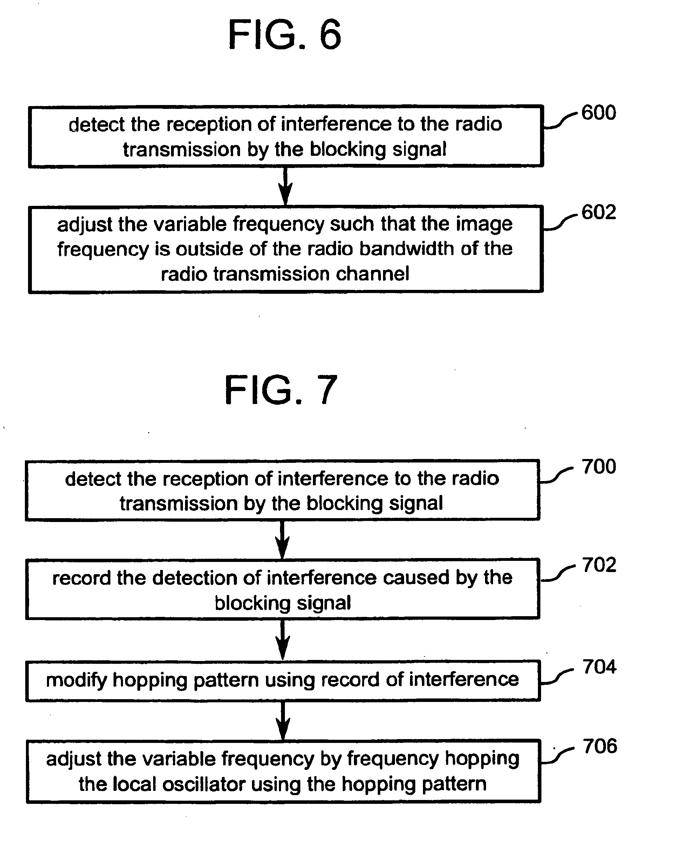

Fig. 6 shows an embodiment of a method according to the invention. In step 600 the reception of interference to the radio transmission by a blocking signal is detected. In step 602 the interference is removed or reduced by adjusting the variable frequency such that the image frequency is outside the radio bandwidth of the radio transmission channel. As was mentioned previously the reception interference could be detected directly by noticing a deterioration or interference with the reception of a radio transmission or the blocking signal could be detected independently and the frequency of an image could be calculated. This method may be used in the implementation of a computer program product.

Fig. 7 shows a further embodiment of a method according to the invention. In step 700 the reception of interference to the radio transmission by the blocking signal is detected. In step 702 the detection of the interference caused by the blocking signal is recorded. For example the frequency of the local oscillator could be recorded when the signal quality of the radio transmission deteriorates. In step 704 the record of interference is used to modify a hopping pattern. The hopping pattern is used for changing the frequency of the local oscillator means as a function of time. In step 706 the variable frequency is adjusted by frequency hopping the local oscillator or local oscillator means using the hopping pattern. This particular method is especially advantageous because by detecting and recording the interference of the radio transmission frequencies which typically experience interference are avoided plus by frequency hopping interference can be further reduced to the signal. This is because the signal does not stay at any one particular frequency more than a specified period of time. If the time frequency between hops is small then noise or an image frequency caused by a particular baseband frequency will not cause interference for more than the time period of the frequency hop. This method may be used in the implementation of a computer program product.

Embodiments of the direct down conversion receiver may be incorporated into cellular telephone networks. For example a base station or a node B may contain a direct down conversion receiver.

### List of reference numerals

- 100: direct down conversion receiver
- 102: IQ demodulator
- 104: antenna
- 106: band pass filter
- 108: amplifier
- 110: mixer
- 112: mixer
- 114: phase shifter
- 116: oscillator
- 118: band pass filter
- 120: amplifier
- 122: analog to digital converter
- 124: Q output
- 126: band pass filter
- 128: amplifier
- 130: analog to digital converter
- 132: I output
- 134: controller
- 136: processor
- 138: memory
- 140: program
- 142: hopping pattern
- 144: record of transmission interferences
- 146: blocking signal detection means
- 200: frequency axis
- 202: power axis
- 204: blocking signal
- 206: first user signal
- 208: second user signal
- 210: F_{LO1} - local oscillator frequency 1
- 212: F_{LO1} - F_{offset1}
- 214: F_{LO1} + F_{offset1}
- 220: center of base band frequency
- 222: -F_{offset1}
- 224: +F_{offset1}
- 310: F_{LO2} - local oscillator frequency 2
- 312: F_{LO2} - F_{offset2}
- 314: F_{LO2} + F_{offset2}
- 320: center of base band frequency
- 322: -F_{offset2}
- 324: +F_{offset2}
- 416: image of blocking signal
- 516: image of blocking signal

## Claims

1. A direct down conversion receiver (100) for receiving a radio transmission (208) in a radio transmission channel, wherein the direct down conversion receiver comprises an IQ demodulator means (102), wherein the IQ demodulator has a baseband frequency (220, 320), wherein the IQ demodulator means comprises a local oscillator means (116) having a variable frequency which determines the baseband frequency, wherein the direct down conversion receiver comprises a control means (134) for adjusting the variable frequency for reduction of the interference (416, 516) caused by a blocking signal (204), wherein adjusting the variable frequency changes an image frequency (224, 324) of an image of the blocking signal, wherein the direct down conversion receiver further comprises an interference detection means (148) for detecting (600, 700) the reception of interference to the radio transmission caused by the blocking signal, wherein the control means is adapted for adjusting (602, 702) the variable frequency such that the image frequency is outside of the radio bandwidth of the radio transmission channel **characterized in that** the interference detection means is a separate receiver (146) configured for reporting the detection of the blocking signal to the control means.

2. The direct down conversion receiver of claim 1, wherein the direct down conversion receiver is adapted for receiving radio transmission on multiple radio transmission channels, wherein the multiple radio transmission channels comprise the radio transmission channel, wherein the control means is adapted for adjusting the variable frequency such that the image frequency is outside of the radio bandwidth of the radio transmission channels.

3. The direct down conversion receiver of claim 1 or 2, wherein the direct down conversion receiver is adapted for baseband frequency hopping the local oscillator during the reception of the radio transmission.

4. The direct down conversion receiver of claim 3, wherein the direct down conversion receiver is adapted for baseband frequency hopping using a predetermined set of hopping frequencies.

5. The direct down conversion receiver of claim 4, wherein the radio transmission is a digital radio transmission comprising data, wherein the radio transmission is divided into time slots, wherein the variable frequency is adjusted between each of the time slots.

6. The direct down conversion receiver of claim 3, 4, or 5, wherein the control system is adapted for recording (704) the detection of Interference caused by the blocking signal, wherein the baseband frequency hopping is performed using (706) a hopping pattern (142) which selects frequencies from a set of hopping frequencies.

7. The direct down conversion receiver of claim 6, wherein the hopping pattern is determined at least partially using the recorded detection of interference (144) caused by the blocking signal.

8. The direct down conversion receiver of any one of claims 3 through 7, wherein the direct down conversion receiver further comprises an interference prediction means (146) for detecting the blocking signal and calculating the variable frequency at which the blocking signal interferes with the radio transmission.

9. The direct down conversion receiver of claim 8, wherein the baseband frequency hopping is performed using a hopping pattern (142) which selects frequencies from a set of hopping frequencies, and wherein the variable frequency at which the blocking signal interferes with the radio transmission is excluded from the hopping pattern.

10. The direct down conversion receiver of any one of the preceding claims, wherein the direct down conversion receiver is a multicarrier receiver.

11. A method of operating a direct down conversion receiver (100) for receiving a radio transmission (208) in a radio transmission channel, wherein the direct down conversion receiver comprises an IQ demodulator means (102), wherein the IQ demodulator has a baseband frequency (220, 320), wherein the IQ demodulator means comprises a local oscillator means (116) having a variable frequency which determines the baseband frequency, wherein the direct down conversion reciever further comprises a control means (134) for adjusting the variable frequency for reduction of the interference caused by a blocking signal, wherein adjusting the variable frequency changes an image frequency (224, 324) of an image of the blocking signal, wherein the control means is adapted for adjusting (602, 702) the variable frequency such that the image frequency is outside of the radio bandwidth of the radio trans-mission channel, wherein the direct down conversion receiver further comprises an interference detection means (146) for detecting the reception of interference to the radio transmission caused by the blocking signal, and wherein the interference detection means is a separate receiver (146) configured for reporting the detection of the blocking signal to the control means the method comprising the steps of:
- detecting (600, 700) the reception of interference to the radio transmission caused by the blocking signal, and
- adjusting (602, 702) the variable frequency such that the image frequency is outside of the radio bandwidth of the radio transmission channel.

12. A computer-readable storage medium (138) carrying machine readable instructions (140) which cause a control system (134) of a direct down conversion receiver (100) to perform the method of claim 11.

## Patentansprüche

1. Direktabwärtungsmischungsempfänger (100) für den Empfang einer Funkübertragung (208) in einem Funkübertragungskanal, wobei der Direktabwärtungsmischungsempfänger ein IQ-Demodulator-Mittel (102) umfasst, wobei der IQ-Demodulator eine Basisbandfrequenz (220, 320) aufweist, wobei das IQ-Demodulator-Mittel ein lokales Oszillator-Mittel (116) mit einer variablen Frequenz, welche die Basisbandfrequenz bestimmt, umfasst, wobei der Direktabwärtungsmischungsempfänger ein Steuermittel (134) zum Anpassen der variablen Frequenz, um die durch ein Sperrsignal (204) verursachte Interferenz (416, 516) zu reduzieren, umfasst, wobei das Anpassen der variablen Frequenz eine Spiegelfrequenz (224, 324) einer Abbildung des Sperrsignals ändert, wobei der Direktabwärtungsmischungsempfänger weiterhin ein Interferenzdetektionsmittel (146) zum Detektieren (600, 700) des Empfangs der durch das Sperrsignal verursachten Interferenz in der Funkübertragung umfasst, wobei das Steuermittel dazu ausgelegt ist, die variable Frequenz derart anzupassen (602, 702), dass sich die Spiegelfrequenz außerhalb der Funkbandbreite des Funkübertragungskanals befindet, **dadurch gekennzeichnet, dass** das Interferenzdetektionsmittel ein separater Empfänger (146) ist, welcher für das Melden der Detektion des Sperrsignals an das Steuermittel konfiguriert ist.

2. Direktabwärtungsmischungsempfänger nach Anspruch 1 , wobei der Direktabwärtungsmischungsempfänger für den Empfang einer Funkübertragung auf mehreren Funkübertragungskanälen ausgelegt ist, wobei die mehreren Funkübertragungskanäle den Funkübertragungskanal umfassen, wobei das Steuermittel dazu ausgelegt ist, die variable Frequenz derart anzupassen, dass sich die Spiegelfrequenz außerhalb der Funkbandbreite des Funkübertragungskanals befindet.

3. Direktabwärtungsmischungsempfänger nach Anspruch 1 oder 2, wobei der Direktabwärtungsmischungsempfänger für den Basisband-Frequenzsprung des lokalen Oszillators während des Empfangs der Funkübertragung ausgelegt ist.

4. Direktabwärtungsmischungsempfänger nach Anspruch 3, wobei der Direktabwärtungsmischungsempfänger für das Durchführen des Basisband-Frequenzsprungverfahrens unter Verwendung eines vorbestimmten Satzes von Sprungfrequenzen ausgelegt ist.

5. Direktabwärtungsmischungsempfänger nach Anspruch 4, wobei die Funkübertragung eine digitale Funkübertragung ist, welche Daten enthält, wobei die Funkübertragung in Zeitschlitze aufgeteilt ist, wobei die variable Frequenz zwischen einem jeden der Zeitschlitze angepasst wird.

6. Direktabwärtungsmischungsempfänger nach Anspruch 3, 4 oder 5, wobei das Steuersystem für das Aufzeichnen (704) der Detektion einer durch das Sperrsignal verursachten Interferenz ausgelegt ist, wobei das Basisband-Frequenzsprungverfahren unter Verwendung (706) eines Sprungmusters (142), welches Frequenzen aus einem Satz von Sprungfrequenzen auswählt, durchgeführt wird.

7. Direktabwärtungsmischungsempfänger nach Anspruch 6, wobei das Sprungmuster zumindest teilweise unter Verwendung der aufgezeichneten Detektion der durch das Sperrsignal verursachten Interferenz (144) bestimmt wird.

8. Direktabwärtungsmischungsempfänger nach einem beliebigen der Ansprüche 3 bis 7, wobei der Direktabwärtungsmischungsempfänger weiterhin ein Interferenzvorhersagemittel (146) zum Detektieren des Sperrsignals und zum Berechnen der variablen Frequenz, bei welcher das Sperrsignal die Funkübertragung beeinträchtigt, umfasst.

9. Direktabwärtungsmischungsempfänger nach Anspruch 8, wobei das Basisband-Frequenzsprungverfahren unter Verwendung eines Sprungmusters (142), welches Frequenzen aus einem Satz von Sprungfrequenzen auswählt, durchgeführt wird, und wobei die variable Frequenz, bei welcher das Sperrsignal die Funkübertragung beeinträchtigt, aus dem Sprungmuster ausgeschlossen wird.

10. Direktabwärtungsmischungsempfänger nach einem beliebigen der vorstehenden Ansprüche, wobei der Direktabwärtungsmischungsempfänger ein Mehrträgerempfänger ist.

11. Verfahren zum Betreiben eines Direktabwärtungsmischungsempfängers (100) für den Empfang einer Funkübertragung (208) in einem Funkübertragungskanal, wobei der Direktabwärtungsmischungsempfänger ein IQ-Demodulator-Mittel (102) umfasst, wobei der IQ-Demodulator eine Basisbandfrequenz (220, 320) aufweist, wobei das IQ-Demodulator-Mittel ein lokales Oszillator-Mittel (116) mit einer variablen Frequenz, welche die Basisbandfrequenz bestimmt, umfasst, wobei der Direktabwärtungsmischungsempfänger weiterhin ein Steuermittel (134) zum Anpassen der variablen Frequenz, um die durch ein Sperrsignal verursachte Interferenz zu reduzieren, umfasst, wobei das Anpassen der variablen Frequenz eine Spiegelfrequenz (224, 324) einer Abbildung des Sperrsignals ändert, wobei das Steuermittel dazu ausgelegt ist, die variable Frequenz derart anzupassen (602, 702), dass sich die Spiegelfrequenz außerhalb der Funkbandbreite des Funkübertragungskanals befindet, wobei der Direktabwärtungsmischungsempfänger weiterhin ein Interferenzdetektionsmittel (146) zum Detektieren des Empfangs der durch das Sperrsignal verursachten Interferenz in der Funkübertragung umfasst, und wobei das Interferenzdetektionsmittel ein separater Empfänger (146) ist, welcher für das Melden der Detektion des Sperrsignals an das Steuermittel konfiguriert ist, wobei das Verfahren die folgenden Schritte umfasst:
Detektieren (600, 700) des Empfangs einer durch das Sperrsignal verursachten Interferenz in der Funkübertragung, und
Anpassen (602, 702) der variablen Frequenz, so dass sich die Spiegelfrequenz außerhalb der Funkbandbreite des Funkübertragungskanals befindet.

12. Computerlesbares Speichermedium (138) mit maschinenlesbaren Befehlen (140), welche bewirken, dass ein Steuersystem (134) eines Direktabwärtungsmischungsempfängers (100) das Verfahren gemäß Anspruch 11 durchführt.

## Revendications

1. Récepteur par réduction de fréquence directe (100) pour recevoir une émission radio (208) dans un canal d'émission radio, le récepteur par réduction de fréquence directe comprenant un moyen de démodulateur IQ (102), dans lequel le démodulateur IQ présente une fréquence de bande de base (220, 320), dans lequel le moyen de démodulateur IQ comprend un moyen d'oscillateur local (116) présentant une fréquence variable qui détermine la fréquence de bande de base, dans lequel le récepteur par réduction de fréquence directe comprend un moyen de commande (134) pour régler la fréquence variable pour la réduction des interférences (418, 516) dues à un signal de blocage (204), dans lequel le réglage de la fréquence variable change une fréquence image (224, 324) d'une image du signal de blocage, le récepteur par réduction de fréquence directe comprenant en outre un moyen de détection d'interférences (146) pour détecter (600, 700) la réception d'interférences sur l'émission radio dues au signal de blocage, dans lequel le moyen de commande est adapté pour régler (602, 702) la fréquence variable de sorte que la fréquence image soit en dehors de la largeur de bande radio du canal d'émission radio, **caractérisé en ce que** ledit moyen de détection d'interférences est un récepteur (146) séparé configuré pour signaler la détection du signal de blocage au moyen de commande.

2. Récepteur par réduction de fréquence directe selon la revendication 1, dans lequel le récepteur par réduction de fréquence directe est adapté pour recevoir une émission radio sur des canaux d'émission radio multiples, dans lequel les canaux d'émission radio multiples comprennent le canal d'émission radio, dans lequel le moyen de commande est adapté pour régler la fréquence variable de sorte que la fréquence image soit en dehors de la largeur de bande radio des canaux d'émission radio.

3. Récepteur par réduction de fréquence directe selon la revendication 1 ou 2, le récepteur par réduction de fréquence directe étant adapté pour le saut de fréquence en bande de base de l'oscillateur local durant la réception de l'émission radio.

4. Récepteur par réduction de fréquence directe selon la revendication 3, le récepteur par réduction de fréquence directe étant adapté pour le saut de fréquence en bande de base en utilisant un ensemble prédéterminé de fréquences de saut.

5. Récepteur par réduction de fréquence directe selon la revendication 4, dans lequel l'émission radio est une émission radio numérique comprenant des données, dans lequel l'émission radio est divisée en créneaux temporels, dans lequel la fréquence variable est réglée entre chacun des créneaux temporels.

6. Récepteur par réduction de fréquence directe selon la revendication 3, 4 ou 5, dans lequel le système de commande est adapté pour enregistrer (704) la détection d'interférences dues au signal de blocage, dans lequel le saut de fréquence en bande de base est effectué en utilisant (706) un modèle de saut (142) qui sélectionne des fréquences parmi un ensemble de fréquences de saut.

7. Récepteur par réduction de fréquence directe selon la revendication 6, dans lequel le modèle de saut est déterminé au moins partiellement en utilisant la détection enregistrée d'interférences (144) dues au signal de blocage.

8. Récepteur par réduction de fréquence directe selon l'une quelconque des revendications 3 à 7, dans lequel le récepteur par réduction de fréquence directe comprend en outre un moyen de prédiction d'interférences (146) pour détecter le signal de blocage et calculer la fréquence variable à laquelle le signal de blocage interfère avec l'émission radio.

9. Récepteur par réduction de fréquence directe selon la revendication 8, dans lequel le saut de fréquence en bande de base est effectué en utilisant un modèle de saut (142) qui sélectionne des fréquences parmi un ensemble de fréquences de saut, et dans lequel la fréquence variable à laquelle le signal de blocage interfère avec l'émission radio est exclue du modèle de saut.

10. Récepteur par réduction de fréquence directe selon l'une quelconque des revendications précédentes, le récepteur par réduction de fréquence directe étant un récepteur multiporteuse.

11. Procédé de fonctionnement d'un récepteur par réduction de fréquence directe (100) pour recevoir une émission radio (208) dans un canal d'émission radio, dans lequel le récepteur par réduction de fréquence directe comprend un moyen de démodulateur IQ (102), dans lequel le démodulateur IQ présente une fréquence de bande de base (220, 320), dans lequel le moyen de démodulateur IQ comprend un moyen d'oscillateur local (116) présentant une fréquence variable qui détermine la fréquence de bande de base, dans lequel le récepteur par réduction de fréquence directe comprend en outre un moyen de commande (134) pour régler la fréquence variable pour la réduction des interférences dues à un signal de blocage, dans lequel le réglage de la fréquence variable change une fréquence image (224, 324) d'une image du signal de blocage, dans lequel le moyen de commande est adapté pour régler (602, 702) la fréquence variable de sorte que la fréquence image soit en dehors de la largeur de bande radio du canal d'émission radio, dans lequel le récepteur par réduction de fréquence directe comprend en outre un moyen de détection d'interférences (146) pour détecter la réception d'interférences sur l'émission radio dues au signal de blocage, et dans lequel le moyen de détection d'interférences est un récepteur (146) séparé configuré pour signaler la détection du signal de blocage au moyen de commande, le procédé comprenant les étapes suivantes :
- détecter (600, 700) la réception d'interférences sur l'émission radio dues au signal de blocage, et
- régler (602, 702) la fréquence variable de sorte que la fréquence image soit en dehors de la largeur de bande radio du canal d'émission radio.

12. Support de stockage lisible par ordinateur (138) exécutant des instructions lisibles par une machine (140) qui entraînent l'exécution du procédé selon la revendication 11 par un système de commande (134) d'un récepteur par réduction de fréquence directe (100).
